# EUROPEAN PATENT APPLICATION

(11) **EP 4 738 239 A1**
(43) Date of publication of application: **06.05.2026**
(21) Application number: 24831879.2
(22) Date of filing: 21.06.2024
(51) Int. Cl.: G06T 3/4053, H04N 7/18

(54) **IMAGE PROCESSING SYSTEM, IMAGE PROCESSING METHOD, AND PROGRAM**

(30) Priority: 30.06.2023 JP 2023108580
(71) Applicant: Sony Interactive Entertainment Inc., Tokyo 108-0075 (JP); Sony Group Corporation, Tokyo 108-0075 (JP)
(72) Inventor: YOKOTA, Kenichiro, Tokyo 108-0075 (JP); KOBIKI, Hisashi, Tokyo 108-0075 (JP); IKENOUE, Shoichi, Tokyo 108-0075 (JP)
(74) Representative: Fish & Richardson P.C.
(86) International application number: PCT/JP2024/022662
(87) International publication number: WO 2025/005018

(57) **Abstract**

It is made possible to perform high-precision super-resolution processing on moving images generated from an object whose texture changes without relying on movement information. An image processing system, wherein a processor acquires first to Nth input frames having a number of input pixels and first to Nth intermediate frames from each input frame, acquires first to Nth estimated frames from each intermediate frame, identifies an nth color change pixel including color information that changes regardless of the movement of the object in the nth intermediate frame based on texture information of the object, and acquires nth auxiliary information by replacing the pixel value of the color change pixel in the nth cumulative feature information with a predetermined value, and the machine learning model includes an output layer that outputs the nth cumulative feature information and an output layer that outputs the nth estimated frame, and learns using a plurality of training data including a learning intermediate frame, the auxiliary information in which the color change pixel has been replaced with a predetermined value, and a learning estimated frame.

## Description

### [Technical Field]

The present invention relates to an image processing system, an image processing method, and a program.

### [Background Art]

Conventionally, art for using a machine learning model to estimate a high quality still image based on a low quality still image (super-resolution) is known (see Non-Patent Document 1 below).

### [Prior Art Documents]

### [Non-Patent Documents]

[Non-Patent Document 1] Chao Dong, Chen Change Loy, Kaiming He, Xiaoou Tang. Learning a Deep Convolutional Network for Image Super-Resolution, in Proceedings of European Conference on Computer Vision (ECCV), 2014

### [Summary of Invention]

### [Problem to be Solved by Invention]

The inventors of the present application are considering applying super-resolution described above to moving images such as game screens. In super-resolution of moving images, it is believed that moving images of higher image quality can be estimated by taking into consideration not only information about each frame to be processed but also information about a past frame of these frames. In particular, degradation of image quality due to ghosting can be avoided by taking into consideration information that indicates the movement of an object, such as a motion vector. However, there are cases where the texture of an object changes regardless of the movement information of the object, such as when the object is a mirror or when the object has an animation texture. When super-resolution processing that takes movement information into consideration is performed on moving images generated from such objects, it may actually result in a decrease in image quality.

An object of the present disclosure is to provide an image processing system, an image processing method, and a program that can perform high-precision super-resolution processing on moving images generated from objects with changing textures without relying on movement information, in image processing means that estimate high-quality moving images based on low-quality moving images using movement information and information from past frames.

### [Means for Solving Problem]

An image processing system according to the present invention is an image processing system including at least one processor, wherein: the at least one processor acquires each of first to Nth input frames (N is a natural number of 2 or more) having a predetermined number of input pixels; acquires first to Nth intermediate frames by generating intermediate frames having a number of intermediate pixels equal to or greater than the number of input pixels and that correspond to the input frames based on the input frame; and acquires first to Nth estimated frames having a number of estimated pixels equal to or greater than the number of intermediate pixels and greater than the number of input pixels by inputting each intermediate frame into a machine learning model; the machine learning model includes a cumulative feature information output layer having the nth intermediate frame (n = 2, 3, ..., N) and n-1th auxiliary information based on n-1th cumulative feature information indicating a feature of the first to n-1th intermediate frames are input, and wherein the nth cumulative feature information indicating a feature of the first to nth intermediate frames is output; and an estimated frame output layer wherein the nth cumulative feature information is input and wherein the nth estimated frame is output; the at least one processor identifies an nth color change pixel including color information that changes regardless of movement of an object in the nth intermediate frame based on texture information of the object and acquires the nth auxiliary information by replacing a pixel value of the color change pixel at the nth cumulative feature information with a predetermined value; and the machine learning model learns using a plurality of training data respectively including a learning intermediate frame having the number of intermediate pixels generated based on a learning intermediate frame having the number of intermediate pixels generated based on a learning input frame having the number of input pixels, the auxiliary information in which the color change pixels are replaced with a predetermined value, and a learning estimated frame having the number of estimated pixels.

### [Brief Description of Drawings]

[FIG. 1] A diagram illustrating one example of a hardware configuration of an image processing system.
[FIG. 2] A diagram illustrating an overview of an image processing system.
[FIG. 3] A diagram schematically illustrating processing in an image processing system.
[FIG. 4] A functional block diagram illustrating one example of functions realized by the image processing system.
[FIG. 5] A diagram describing processing of a rendering unit.
[FIG. 6] A diagram describing processing in an intermediate frame acquisition unit.
[FIG. 7] A diagram schematically illustrating processing for defining a color change pixel.
[FIG. 8] A flowchart illustrating one example of the flow of processing executed in an image processing system.

### [Embodiments of Invention]

One example of an embodiment of an image processing system according to the present disclosure will be described below with reference to the drawings.

### [1. Hardware Configuration of Image Processing System]

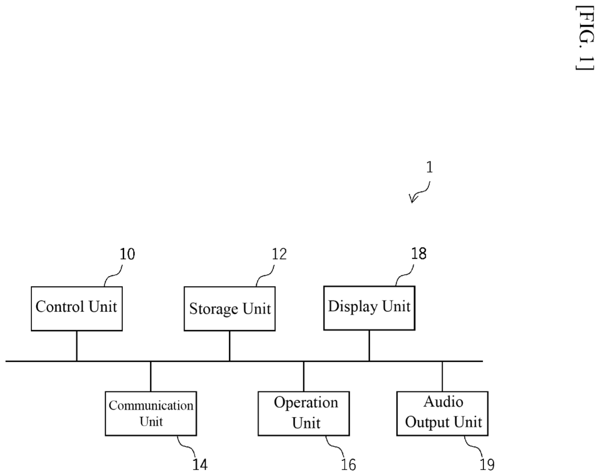

FIG. 1 is a diagram illustrating one example of a hardware configuration of an image processing system 1. The image processing system 1 is, for example, a computer such as a game console (game device). As illustrated in FIG. 1, the image processing system 1 includes a control unit 10, a storage unit 12, a communication unit 14, an operation unit 16, a display unit 18, and an audio output unit 19.

The control unit 10, for example, includes a program control device such as a CPU that operates according to a program installed in the image processing system 1. The control unit 10 also includes a GPU (Graphics Processing Unit) that depicts images in a frame buffer based on graphics commands or data supplied from the CPU.

The storage unit 12 includes, for example, a main storage device such as ROM or RAM, and an auxiliary storage device such as an HDD or an SSD. The storage unit 12 stores a program or the like executed by the control unit 10. The storage unit 12 stores, for example, a game program (game software) in addition to a program for implementing various functions of the image processing system 1, which will be described later. Furthermore, the storage unit 12 also has a frame buffer area reserved for images depicted by the GPU.

The communication unit 14 is a communication interface such as an Ethernet (registered trademark) module or a wireless LAN module.

The operation unit 16 is a user interface such as a keyboard, mouse, or game console controller, and receives operation inputs from a user and outputs signals indicating the details of the inputs to the control unit 10.

The display unit 18 is a display device such as a liquid crystal display or an organic EL display, and displays various images according to instructions from the control unit 10.

The audio output unit 19 is, for example, a speaker or the like, and outputs audio represented by audio data generated by the image processing system 1.

Note that in addition to the devices described above, the image processing system 1 may also include an optical disc drive that reads optical discs such as DVD-ROMs and Blu-ray (registered trademark) discs, a USB (Universal Serial Bus) port, and the like.

### [2. Overview of Image Processing System]

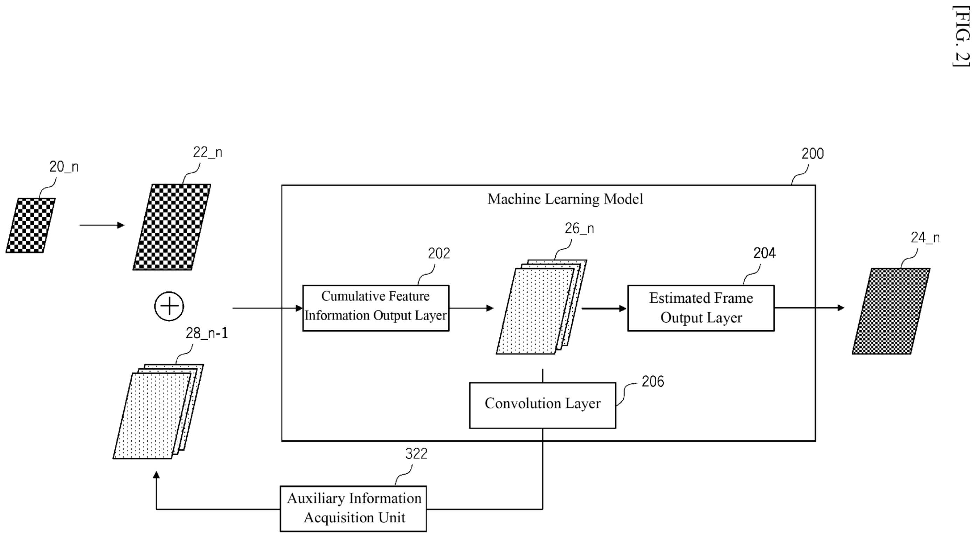

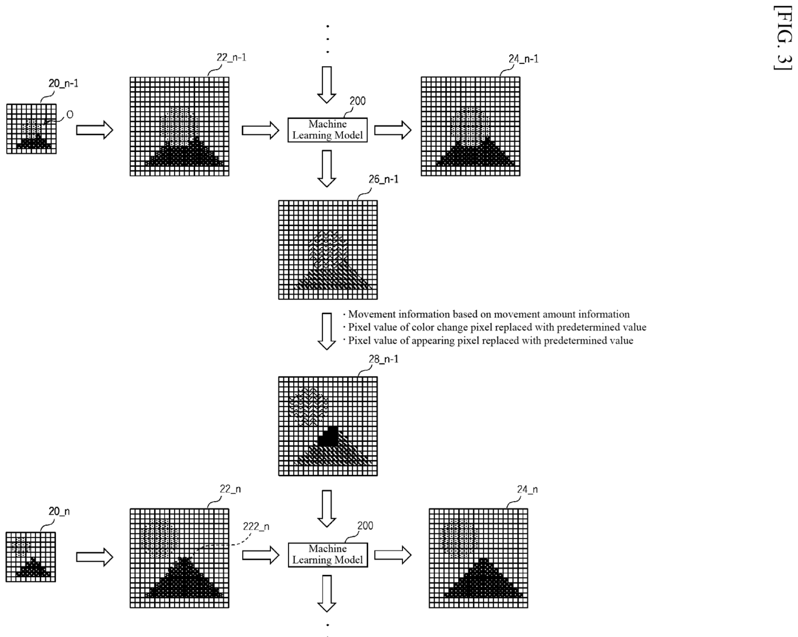

FIG. 2 is a diagram illustrating an overview of the image processing system 1. FIG. 3 is a diagram schematically illustrating processing in the image processing system 1. In the present embodiment, an example will be given in which the image processing system 1 is used to improve the image quality of gameplay moving images in a game. A gameplay moving image is a moving image generated in response to a game program executed by the control unit 10, user input received by the operation unit 16, and the like, and is composed of a plurality of still images (frames) that are chronological data. The processing performed in the image processing system 1 is mainly as follows.

### (1) Generation of input frame

First, the image processing system 1 generates an image (input frame) in which one or more game objects are depicted by rendering three-dimensional data that illustrates the game objects as seen from a predetermined viewpoint. This input frame is an image having a predetermined number of pixels (number of input pixels) and a predetermined image quality (input image quality) (see FIG. 3). The input frame is generated at predetermined time intervals. The number of pixels in the input frame is, for example, 1920×1080 (1080p). Each generated input frame is not displayed as-is on the display unit 18, but is temporarily stored in the storage unit 12 and is used in subsequent processing. In the following description, processing for an nth (nth) input frame 20_n will be mainly given as an example, but similar processing is also executed for other input frames (that is, n = 2, 3, ..., N).

### (2) Acquisition of intermediate frame

The image processing system 1 acquires a frame (intermediate frame) 22_n having a number of pixels (number of intermediate pixels) greater than the number of input pixels, based on the acquired input frame 20_n. The number of intermediate pixels is, for example, 3840×2160 (4K). Specifically, the intermediate frame 22_n is generated by executing enlargement and interpolation processing on the input frame 20_n (see FIG. 3).

It should be noted that although the intermediate frame 22_n has more pixels than the input frame 20_n, image quality thereof is not necessarily improved sufficiently. That is, the image quality of a frame does not simply refer to the number of pixels (high resolution). The image quality of a frame may be evaluated based on, for example, a high SN ratio, high spatial frequency reproducibility, high temporal stability (fewer artifacts and flicker when a plurality of frames are displayed consecutively), and the like, or a combination of these, when compared to a reference frame.

### (3) Acquisition of estimated frame

The image processing system 1 inputs the intermediate frame 22_n to a machine learning model 200 to acquire an estimated frame 24_n. The estimated frame 24_n is an image having the same number of pixels (number of estimated pixels) as the number of intermediate pixels and an image quality (estimated image quality) that is equal to or higher than the input image quality (see FIG. 3).

Here, in addition to the intermediate frame 22_n, n-1th auxiliary information 28_n-1 is input to the machine learning model 200 (see FIG. 2 and FIG. 3). The auxiliary information 28_n-1 is information based on n-1th cumulative feature information 26_n-1 that indicates features of first to n-1th intermediate frames 22. The cumulative feature information 26 and the auxiliary information 28 will be described in detail later.

The machine learning model 200 is a model taught using a plurality of training data sets, each of which includes a learning intermediate frame having a number of intermediate pixels generated based on a learning input frame having a number of input pixels and an input image quality, and a learning estimated frame having a number of estimated pixels and an estimated image quality. The details of the machine learning model 200 will be described in detail later.

### (4) Acquisition of cumulative feature information

The machine learning model 200 has a cumulative feature information output layer 202 that receives the intermediate frame 22_n and auxiliary information 28_n-1 and outputs nth cumulative feature information 26_n that indicates features of the first to nth input frames 22 (see FIG. 2). The image processing system 1 acquires the nth cumulative feature information 26_n.

The acquired nth cumulative feature information 26_n is input to an estimated frame output layer 204, and the nth estimated frame 24_n is output from the estimated frame output layer 204 (see FIG. 2). The acquired nth cumulative feature information 26_n is also stored in the storage unit 12 and is used to estimate an estimated frame 24_n+1 corresponding to a next input frame (the n+1th input frame) 20_n+1.

### (5) Acquisition of auxiliary information

As described above, the n-1th cumulative feature information 26_n-1 is information indicating the features of the first to n-1th intermediate frames 22 (and consequently the first to n-1th input frames 20). In this way, by using the cumulative feature information 26_n-1, which is the cumulative information of past input frames 20, to estimate the nth estimated frame 24_n, the amount of information available for estimation increases, making it possible to acquire a high quality estimated frame 24_n.

However, when there is movement or the like in the displayed game object between the n-1th input frame 20_n-1 and the nth input frame 20_n, when the nth intermediate frame 22_n and the cumulative feature information 26_n-1 are input directly to the machine learning model 200, a phenomenon (so-called ghost phenomenon) may occur in which an afterimage of the game object that was displayed in the n-1th input frame 20_n-1 is displayed.

Therefore, the image processing system 1 acquires the n-1th auxiliary information 28_n-1 by applying various corrections described below to the cumulative feature information 26_n-1 based on information acquired during rendering (information indicating movement vectors, depth buffer, texture type, and the like) (see FIG. 2 and FIG. 3). As described above, the acquired n-1th auxiliary information 28_n-1 is input to the machine learning model 200 together with the nth intermediate frame 22_n and is used to estimate the nth estimated frame 24_n.

As described above, according to the image processing system 1 of the present embodiment, an estimated frame 24 is estimated using auxiliary information 28 that accumulates past information in addition to the intermediate frame 22 that corresponds to the current input frame 20. This increases the amount of information available for estimation, making it possible to acquire a high quality estimated frame 24_n. The image processing system 1 will be described in detail below.

### [3. Functions Realized by Image Processing System]

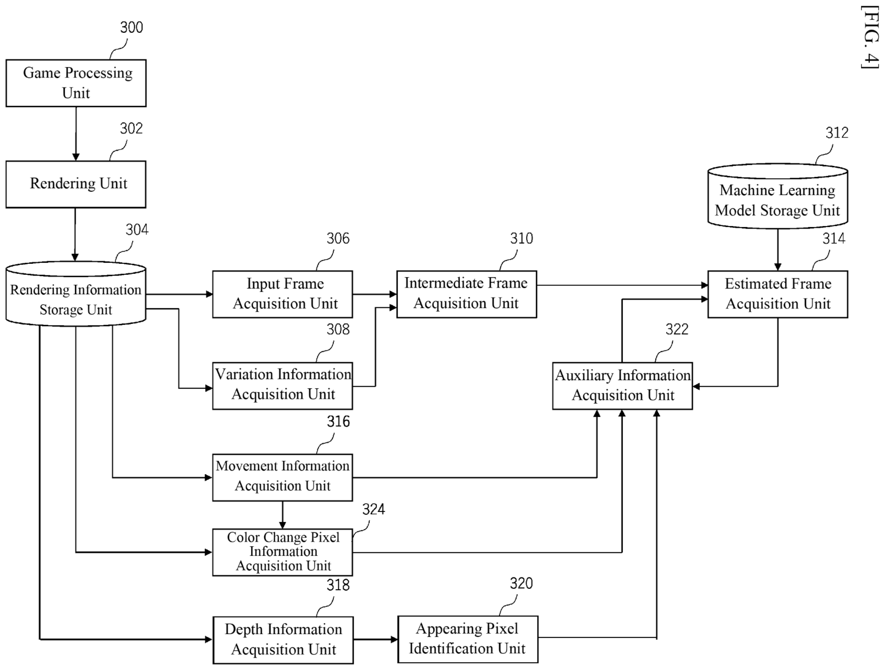

FIG. 4 is a functional block diagram illustrating one example of functions realized by the image processing system 1. As illustrated in FIG. 4, in the image processing system 1, a game processing unit 300, a rendering unit 302, a rendering information storage unit 304, an input frame acquisition unit 306, a variation information acquisition unit 308, an intermediate frame acquisition unit 310, a machine learning model storage unit 312, an estimated frame acquisition unit 314, a movement information acquisition unit 316, a depth information acquisition unit 318, an appearing pixel identification unit 320, an auxiliary information acquisition unit 322 are realized, and a color change pixel information acquisition unit 324. The game processing unit 300, rendering unit 302, input frame acquisition unit 306, variation information acquisition unit 308, intermediate frame acquisition unit 310, estimated frame acquisition unit 314, movement information acquisition unit 316, depth information acquisition unit 318, appearing pixel identification unit 320 auxiliary information acquisition unit 322 and color change pixel information acquisition unit 324 are mainly realized by the control unit 10. The rendering information storage unit 304 and the machine learning model storage unit 312 are mainly implemented by the storage unit 12. The game processing unit 300, rendering unit 302, and rendering information storage unit 304 are functions provided by game software.

### [Game Processing Unit]

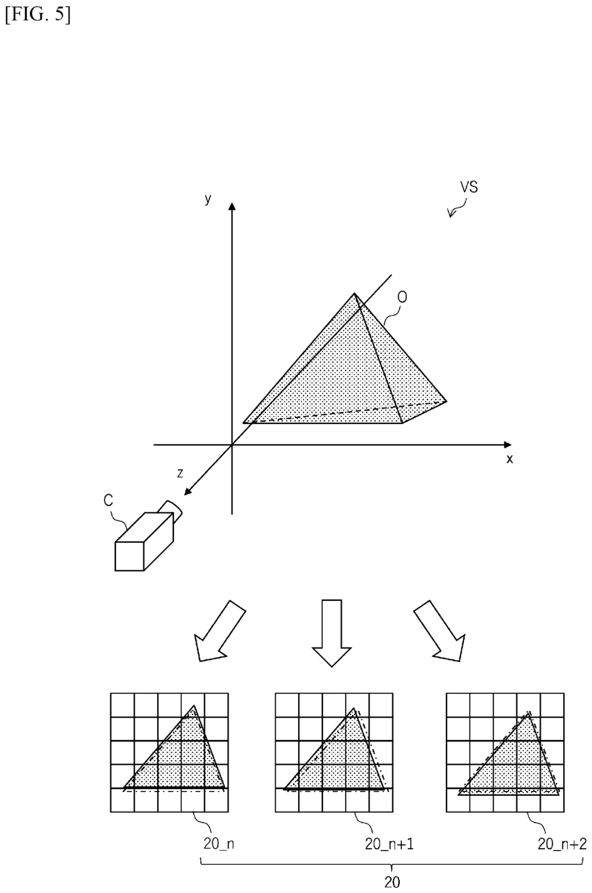

The game processing unit 300 executes various processes related to a game. The game processing unit 300 executes processes such as placing a game object O in a virtual three-dimensional space VS, operating or moving the game object O, and changing a viewpoint C from which the virtual three-dimensional space VS is viewed, in accordance with, for example, a game program executed by the control unit 10 and user input received by the operation unit 16 (see FIG. 5). The game object O is composed of primitives such as polygons represented by three-dimensional data. The three-dimensional data includes geometric information indicating positions of vertices, etc., topological information indicating how the vertices are connected, and attribute information such as color.

### [Rendering Unit]

FIG. 5 is a diagram describing processing of the rendering unit 302. The rendering unit 302 generates first to Nth (N is a natural number greater than or equal to 2) input frames 20 by executing rendering (depiction processing) of three-dimensional data representing one or more game objects O viewed from a predetermined viewpoint C. The rendering unit 302 executes rendering based on results of various processes executed by the game processing unit 300. Specifically, the rendering unit 302 executes vertex processing (vertex shading) and pixel processing (pixel shading) based on three-dimensional data representing the game object O disposed in the virtual three-dimensional space VS. Vertex processing includes a coordinate transformation process (perspective projection) from a view coordinate system to a screen coordinate system, and a numerical value related to variation in the viewpoint C is added to the perspective projection matrix (camera matrix) used in the coordinate transformation process, as described later. The rendering unit 302 may execute rendering based on light source information, depth information (depth buffer), texture information, normal information, and the like. The texture information of a game object may be an animation texture (animation information) which is a moving image, or color information (mirror map information) which is incident on a viewpoint C having the game object as a mirror surface. In addition, the texture information of a game object may be color information (ray tracing information) calculated by extending a straight line connecting viewpoint C and each pixel on the drawing surface in a space, and calculating the light intensity at the first point on the surface of the object that is hit, taking into account transmission and refraction. In addition to the above processes, the rendering unit 302 may also execute processes to apply effects such as depth of field (DoF) and motion blur. The processing of the rendering unit 302 may be set as appropriate by game software developer or the like. Here, the game software developer or the like may adjust a texture MIP according to the number of estimated pixels of the estimated frame 24 or the like. This makes it possible to suppress generation of noise such as moire patterns in the estimated frame 24.

Here, the rendering unit 302 generates each input frame 20 by executing rendering so that the viewpoint C varies for each input frame 20. Here, even when the game processing unit 300 fixes the viewpoint C at a predetermined position, the rendering unit 302 varies the viewpoint C for each input frame 20. As a result, as illustrated in FIG. 5, the position of the displayed game object O varies in each input frame 20_n, 20_n+1, and 20_n+2. In other words, the rendering unit 302 applies jitter (jitter) when generating each input frame 20. Specifically, the rendering unit 302 varies the viewpoint C for each input frame 20 by adding a numerical value corresponding to a size less than one pixel, which differs for each input frame 20, to the perspective projection matrix. The rendering unit 302 varies the viewpoint C for each input frame 20 according to a predetermined rule. For example, a Halton sequence may be used as such a rule.

### [Rendering Information Storage Unit]

The rendering information storage unit 304 stores information necessary for the rendering process in the rendering unit 302 and information obtained as a result of the rendering process. For example, the rendering information storage unit 304 stores the input frame 20. The rendering information storage unit 304 also stores variation information, movement information, and depth information. The variation information, movement information, and depth information will be described in detail later. Furthermore, when the texture information of the game object is animation information, mirror map information, or ray tracing information, the rendering information storage unit 304 may store color change pixel information representing the distribution of pixels generated based on this information among the pixels of the input frame 20. Additionally, the rendering information storage unit 304 may store parameters used in coordinate transformation, light source information, texture information, normal information, or the like.

### [Input Frame Acquisition Unit]

The input frame acquisition unit 306 acquires each of the first to Nth input frames 20. Specifically, the input frame acquisition unit 306 acquires the first to Nth input frames 20 stored in the rendering information storage unit 304.

### [Variation Information Acquisition Unit]

The variation information acquisition unit 308 acquires variation information. The variation information acquisition unit 308 acquires the variation information stored in the rendering information storage unit 304. Specifically, the variation information is information indicating an amount of variation of the viewpoint C between before the variation and after the variation. The information indicating the amount of variation may also be called a variation vector indicating a direction and distance of the variation. For example, the Halton sequence described above contains information indicating the amount of variation of the viewpoint C, so this information may be used as variation information.

### [Intermediate Frame Acquisition Unit]

The intermediate frame acquisition unit 310 acquires the first to Nth intermediate frames 22 based on each input frame 20 by generating an intermediate frame 22 that corresponds to the input frame 20 and has a number of intermediate pixels equal to or greater than the number of input pixels. In the present embodiment, each intermediate frame 22 has a number of intermediate pixels that is greater than the number of input pixels. That is, in the present embodiment, each intermediate frame 22 is an enlarged image of the input frame 20 corresponding to the intermediate frame 22.

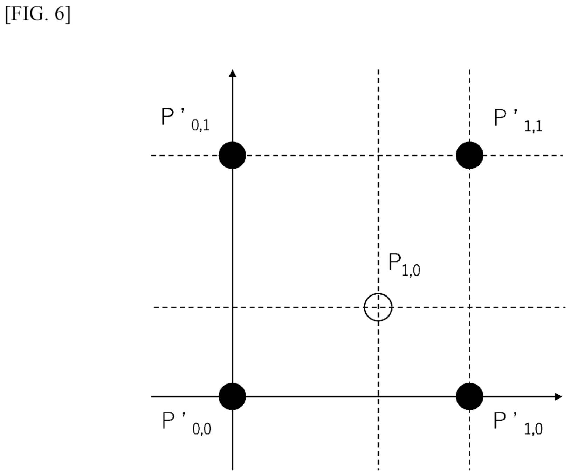

Specifically, the intermediate frame acquisition unit 310 finds, by interpolation, pixel values at positions in the input frame 20 corresponding to each pixel before the variation based on the variation information and each pixel of each input frame 20, and generates each intermediate frame 22. FIG. 6 is a diagram describing processing in the intermediate frame acquisition unit 310. FIG. 6 illustrates an example in which the nth intermediate frame 22_n is found. For example, as illustrated in FIG. 6, when defining a pixel center of a pixel in the intermediate frame 22_n to be acquired as P1,0, the intermediate frame acquisition unit 310 finds a pixel value of P1,0 by bilinear (bilinear) interpolation based on the coordinates and pixel values of the respective pixel centers P'0,0, P'1,0, P'0,1, and P'1,1 of the four pixels closest to P1,0 in the input frame 20_n. Here, P'1,0 is located at a position shifted from P1,0 by the amount of variation indicated by the variation information. The pixel values of the pixels newly generated by the enlargement process are found in the same manner. Various known techniques such as bicubic (bicubic) interpolation and Lanczos interpolation may be used as interpolation methods in addition to bilinear interpolation.

When rendering is executed so that the viewpoint C varies for each input frame 20, the amount of time-series information increases, but by using each input frame 20 obtained in this way (hereinafter referred to as a "varied input frame") for estimation, a higher quality estimated frame 24 may be obtained.

Conversely, when the varied input frame (or an enlarged image thereof) is input directly into the machine learning model 200, the influence of the variation in viewpoint C described above may result in a decrease in the accuracy of estimation.

Therefore, as described above, in the image processing system 1, based on the variation information and each pixel of each input frame 20, pixel values at positions in the input frame 20 corresponding to each pixel before variation are found by interpolation, and each intermediate frame 22 is generated and input into the machine learning model 200. This corrects the influence of variations in the viewpoint C, thereby preventing decrease in the accuracy of estimation.

### [Machine Learning Model]

The machine learning model 200 is a model that estimates an nth estimated frame 24_n based on the nth intermediate frame 22_n. Specifically, the machine learning model 200 is a model that estimates the nth estimated frame 24_n based on the nth intermediate frame 22_n and the n-1th auxiliary information 28_n-1. Specifically, the machine learning model 200 is a convolutional neural network (CNN: convolutional neural network). Known models such as a multi-layered ResNet with a residual connection mechanism, a so-called encoder-decoder type U-Net, or the like may be used as the machine learning model 200. The model described in Non-Patent Document 1 may be used as the machine learning model 200.

The machine learning model 200 is a model taught using a plurality of training data sets, each of which includes a learning intermediate frame having a number of intermediate pixels generated based on a learning input frame having a number of input pixels, auxiliary information 28 of color change pixels being replaced with a predetermined value, and a learning estimated frame having a number of estimated pixels. Various known techniques such as backpropagation may be used to teach the machine learning model 200. In the auxiliary information 28 included in the training data, color change pixels are replaced with predetermined values. That is, the machine learning model 200 has already learned using the auxiliary information 28 to which no movement compensation (described hereafter) has been applied for the color change pixels.

Specifically, the machine learning model 200 includes the cumulative feature information output layer 202, the estimated frame output layer 204, and a convolution layer 206 (see FIG. 2).

The cumulative feature information output layer 202 receives the nth intermediate frame 22_n and the n-1th auxiliary information 28_n-1 based on the n-1th cumulative feature information 26_n-1 indicating the features of the first to n-1th intermediate frames 22 and outputs the nth cumulative feature information 26_n indicating the features of the first to nth intermediate frames 22_n. The cumulative feature information output layer 202 may be composed of, for example, one or more convolution layers. The cumulative feature information 26_n-1 is image information (bitmap format information) having the same number of pixels as the number of intermediate pixels. The cumulative feature information 26_n-1 may also be called a feature map that indicates the features of the first to n-1th intermediate frames 22.

The cumulative feature information output layer 202 receives a first intermediate frame 22_1 and imparted auxiliary information, and outputs first cumulative feature information 26_1. When n = 1, there is no previous cumulative feature information 26 or auxiliary information 28, so imparted auxiliary information prepared in advance is input to the cumulative feature information output layer 202 together with the first intermediate frame 22_1.

The estimated frame output layer 204 receives the nth cumulative feature information 26_n and outputs the nth estimated frame 24_n. Similarly to the cumulative feature information output layer 202, the estimated frame output layer 204 may be composed of one or more convolution layers, for example. Alternatively, the estimated frame output layer 204 may be composed of one or more transposed convolution layers (deconvolution layers).

The convolution layer 206 is a layer that reduces the number of channels of the cumulative feature information 26 while maintaining the number of pixels. The cumulative feature information 26 output from the convolution layer 206 is used in processing in the auxiliary information acquisition unit 322. The convolution layer 206 may reduce dimensions of the cumulative feature information 26, thereby reducing computational costs. The convolution layer 206 is, for example, a convolution layer having a kernel size of 1×1, but is not limited to this.

### [Machine Learning Model Storage Unit]

The machine learning model storage unit 312 stores the machine learning model 200. Specifically, the machine learning model storage unit 312 stores parameters of the machine learning model 200 (such as the number of convolutional layers, the number of nodes used in each convolutional layer, and the weight of each node).

### [Estimated Frame Acquisition Unit]

The estimated frame acquisition unit 314 inputs each intermediate frame 22 to the machine learning model 200 and acquires first to Nth estimated frames 24 each having a number of estimated pixels greater than the number of input pixels and equal to or greater than the number of intermediate pixels. In the present embodiment, the estimated frame 24 has the same number of estimated pixels as the number of intermediate pixels. More specifically, the estimated frame acquisition unit 314 inputs the nth intermediate frame 22_n and the n-1th auxiliary information 28_n-1 to the machine learning model 200 to acquire the nth estimated frame 24_n.

### [Movement Information Acquisition Unit]

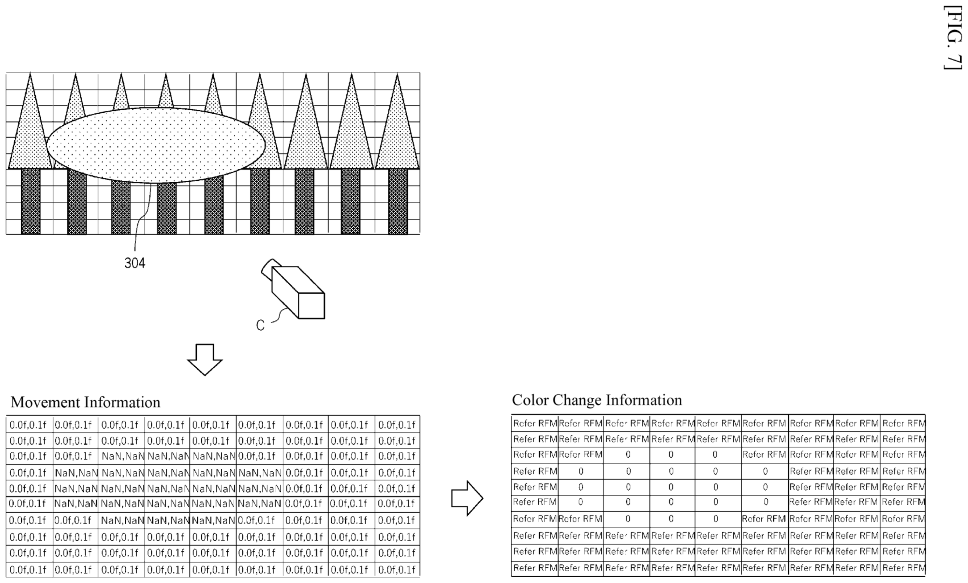

The movement information acquisition unit 316 acquires n-1th movement information, which is information indicating an amount and direction of movement from the n-1th input frame 20_n-1 to the nth input frame 20_n. Specifically, the n-1th movement information is image information (bitmap format information) that has the same number of pixels as the number of intermediate pixels and indicates the amount and direction of movement of each pixel between the n-1th input frame 20_n-1 and the nth input frame 20_n. The movement information is also called a motion vector (motion vector). Specifically, the movement information acquisition unit 316 acquires movement information having the same number of pixels as the number of input pixels, and executes enlargement and interpolation processing on the movement information to acquire movement information having the same number of pixels as the number of intermediate pixels. The movement information acquisition unit 316 acquires information representing that there is no movement (for example, a value of 0) as movement information for pixels generated from a game object that is not moving by rendering. Here, when the texture information of the game object is animation information, mirror map information, or ray tracing information, the movement information acquisition unit 316 may acquire information representing that the pixels are color change pixels instead of information representing that there is no movement. A color change pixel is represented by information representing, for example, infinity (INF) or not a number (NaN) (see FIG. 7).

### [Depth Information Acquisition Unit]

The depth information acquisition unit 318 acquires n-1th depth information indicating the depth of each pixel of the n-1th input frame 20_n-1, and nth depth information indicating the depth of each pixel of the nth input frame 20_n. Depth information is specifically image information having the same number of pixels as the number of intermediate pixels (bitmap format information). The depth information is also called a depth buffer or a Z buffer. Specifically, the depth information acquisition unit 318 acquires depth information having the same number of pixels as the number of input pixels, and then executes enlargement and interpolation processing on the depth information to acquire depth information having the same number of pixels as the number of intermediate pixels.

### [Appearing Pixel Identification Unit]

Based on the n-1th depth information and the nth depth information, the appearing pixel identification unit 320 identifies an nth appearing pixel 222_n, which, among the pixels of the nth intermediate frame 22_n, is a pixel in which all or part of the game object O that is not displayed in an n-1th intermediate frame 22_n-1 is displayed (see FIG. 3). Specifically, the appearing pixel identification unit 320 identifies the nth appearing pixel 222_n based on the difference between the n-1th depth information and the nth depth information. In addition, the appearing pixel identification unit 320 may identify the nth appearing pixel 222_n based on an n-1th perspective projection matrix associated with the n-1th intermediate frame 22_n-1 and an nth perspective projection matrix associated with the nth intermediate frame 22_n. Furthermore, the appearing pixel identification unit 320 may identify the nth appearing pixel 222_n by using the n-1th movement information. More specifically, the appearing pixel identification unit 320 identifies the nth appearing pixel 222_n and generates nth appearing pixel information, which is image information indicating the position of the nth appearing pixel 222_n.

### [Color Change Pixel Information Acquisition Unit]

The color change pixel information acquisition unit 324 identifies an nth color change pixel including color information that changes regardless of the movement of the object in an nth intermediate frame 22 based on the texture information of the object and acquires color change pixel information. Specifically, a description will be given using a drawing illustrating the process of identifying color change pixels illustrated in FIG. 7. The upper part of FIG. 7 shows a schematic diagram of how scenery reflected on the windshield in a racing game or the like is rendered from the viewpoint of the driver's seat. FIG. 7 shows a row of trees against the sky, with a rearview mirror 700 disposed near the center. Each tree is a game object made up of leaves and a trunk, and color information such as green or brown is added to the tree game object as a texture.

On the other hand, the rearview mirror 700 is a game object that is made up of the mirror surface and parts other than the mirror surface, such as the frame. The scenery seen from viewpoint C as reflected by the rearview mirror 700 is added to a portion of the mirror surface as a texture. For example, an image generated by rendering in a direction symmetrical to viewpoint C (the direction of specular reflection) with the position of the rearview mirror 700 as a new viewpoint is attached as the texture of a game object called a rearview mirror.

The movement information acquisition unit 316 acquires movement information illustrated on the bottom left of FIG. 7 as nth movement information, which is information indicating an amount and direction of movement from the n-1th input frame 20_n-1 to the nth input frame 20_n. Specifically, since viewpoint C is located inside the car, the scenery reflected on the windshield changes according to the movement of the car, which is a game object. For example, the movement information acquisition unit 316 acquires movement information representing that pixels representing a tree has moved 0.0 f in the x direction and 0.1 f in the y direction. The movement information acquisition unit 316 also acquires movement information about pixels representing the rearview mirror. Here, the rearview mirror 700 is fixed inside the vehicle and is stationary when viewed from viewpoint C. However, the movement information acquisition unit 316 does not acquire movement information representing that the rearview mirror 700 is in the original stationary state (that is, movement information indicating that it is moving 0 in the x direction and 0 in the y direction), but rather acquires information indicating a color change pixel (for example, NaN in the x direction and NaN in the y direction).

The color change pixel information acquisition unit 324 identifies an nth color change pixel including color information that changes regardless of the movement of the object in an nth intermediate frame 22 in the movement information and acquires color change pixel information. That is, the color change pixel information acquisition unit 324 identifies pixels that contain information indicating that they are color change pixels (here, NaN) in the movement information, and generates the color change pixel information illustrated in the bottom right of FIG. 7. The color change pixel information is image information (bitmap format information) in which the identified color change pixels are 0 and the pixels other than the color change pixels are Refer RFM. Note that Refer RFM is information indicating that no calculation is performed on the pixel in the process using the color change pixel information by the auxiliary information acquisition unit. Specifically, the color change pixel information acquisition unit 324 acquires color change pixel information having the same number of pixels as the number of input pixels, and then executes enlargement and interpolation processing on the color change information to acquire color change pixel information having the same number of pixels as the number of intermediate pixels.

Note that when the rendering information storage unit 304 stores color change pixel information representing the distribution of pixels generated based on animation information, mirror map information, or ray tracing information, the color change pixel information acquisition unit 324 may acquire the color change pixel information from the rendering information storage unit 304 without using movement information.

### [Auxiliary Information Acquisition Unit]

The auxiliary information acquisition unit 322 acquires the n-1th auxiliary information 28_n-1 by applying movement compensation to the n-1th cumulative feature information 26_n-1 based on the n-1th movement information. Movement compensation refers to a process of moving a pixel at a position x in the n-1th cumulative feature information 26_n to a position x', for example, when a pixel at the position x in the n-1th intermediate frame 22_n-1 has moved to the position x' in the nth intermediate frame 22_n (see FIG. 3). That is, the auxiliary information acquisition unit 322 acquires the n-1th auxiliary information 28_n-1 based on the n-1th movement information by setting the pixel values of one or more pixels of the n-1th cumulative feature information 26_n-1 to pixels at positions moved according to the amount and direction of movement of the pixels.

When there is movement of the game object O between the nth input frame 20_n and the n-1th input frame 20_n-1, when acquiring the nth estimated frame 24_n, when the nth intermediate frame 22_n and the n-1th cumulative feature information 26_n-1 are input directly into the machine learning model 200, a ghost phenomenon may occur in which an afterimage of the game object O that was displayed in the nth intermediate frame 22_n is displayed in the output nth estimated frame 24_n.

Therefore, in the image processing system 1, as described above, movement compensation is applied to the n-1th cumulative feature information 26_n-1 based on the n-1th movement information to acquire the n-1th auxiliary information 28_n-1, and when acquiring the nth estimated frame 24_n, this n-1th auxiliary information 28_n-1 is input to the machine learning model 200. This makes it possible to suppress the above ghost phenomenon.

Furthermore, the auxiliary information acquisition unit 322 acquires the n-1th auxiliary information 28_n-1 by replacing the pixel value of the nth appearing pixel 222_n in the n-1th cumulative feature information 26_n-1 with a predetermined value. Specifically, the auxiliary information acquisition unit 322 acquires the n-1th auxiliary information 28_n-1 based on the nth appearing pixel information by replacing the pixel value of the nth appearing pixel 222_n in the n-1th cumulative feature information 26_n-1 with a predetermined value. The predetermined value may be a constant value such as 0 (black), or may be the pixel value of the nth appearing pixel 222_n in the nth intermediate frame 22_n.

When all or part of a game object O that is not displayed in the n-1th input frame 20_n-1 is displayed in the nth input frame 20_n, and when the nth intermediate frame 22_n and the n-1th cumulative feature information 26_n-1 are input directly into the machine learning model 200 when acquiring the nth estimated frame 24_n, the above ghost phenomenon may occur in the output nth estimated frame 24_n.

Therefore, as described above, the image processing system 1 identifies the nth appearing pixel 222_n, which, among the pixels of the nth intermediate frame 22_n, is a pixel where all or part of the game object O that is not displayed in the n-1th intermediate frame 22_n-1 is displayed, and acquires the n-1th auxiliary information 28_n-1 by replacing the pixel value of the nth appearing pixel 222_n in the n-1th cumulative feature information 26_n-1 with a predetermined value. This makes it possible to suppress the above ghost phenomenon.

Furthermore, the auxiliary information acquisition unit 322 acquires the nth auxiliary information by replacing the pixel value of the color change pixel at the nth cumulative feature information with a predetermined value. Specifically, the auxiliary information acquisition unit 322 acquires the nth auxiliary information 28_n by replacing the pixel value of the nth color change pixel in the nth cumulative feature information 26_n with a predetermined value based on the nth color change pixel information. The predetermined value may be a constant value such as 0 (black), or may be the pixel value of the nth color change pixel n in the nth intermediate frame 22_n. The auxiliary information acquisition unit 322 does not perform the above replacement for pixels other than color change pixels.

The color change pixels identified as described above are pixels for which color information has been acquired based on a game object whose texture changes, regardless of the movement information of the game object. Even if the game object is moving, the movement information representing that movement has no relationship to the texture of the game object. When the above-described movement compensation is applied to such color change pixels, the image quality will be deteriorated.

In the image processing system 1,an nth color change pixel including color information that changes regardless of the movement of the object in an nth intermediate frame based on the texture information of the object as described above, and the nth auxiliary information is acquired by replacing the pixel value of the color change pixel at the nth cumulative feature information with a predetermined value. This makes it possible to suppress the above reduction in image quality.

Note that the movement compensation, replacement processing based on appearance pixel information, and replacement processing based on color change pixel information performed by the auxiliary information acquisition unit 322 may be performed in whole or in part on one cumulative feature information 26.

### [4. Processing Executed in Image Processing System]

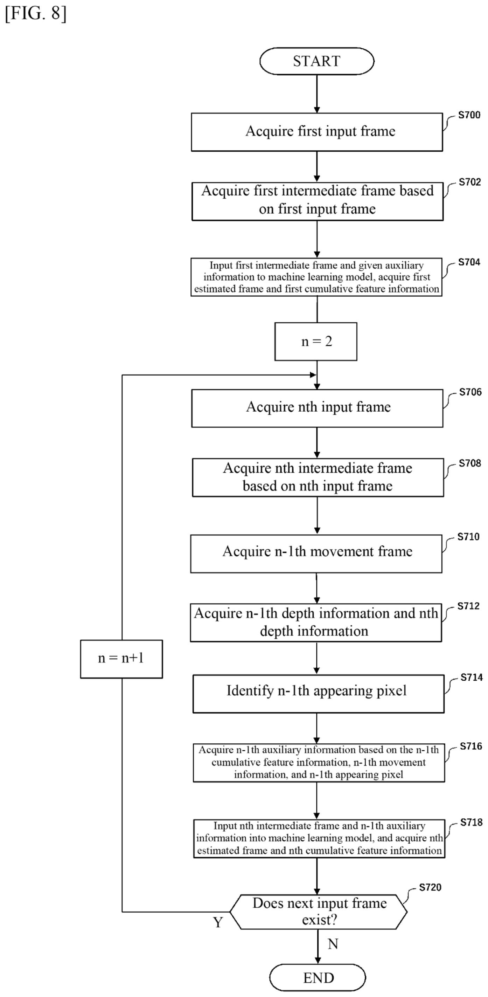

FIG. 8 is a flowchart illustrating one example of the flow of the processing executed in the image processing system 1. The process illustrated in FIG. 7 is executed by the control unit 10 operating in accordance with a program stored in the storage unit 12.

### (1) Processing when n = 1

First, the control unit 10 acquires a first input frame 20_1 (S700). The control unit 10 acquires a first intermediate frame 22_1 based on the first input frame 20_1 (S702). Then, the control unit 10 inputs the first intermediate frame 22_1 and imparted auxiliary information to the machine learning model 200, and acquires a first estimated frame 24_1 and first cumulative feature information 26_1 (S704).

### (2) Processing when n ≥ 2

The control unit 10 acquires the nth input frame 20_n (S706). The control unit 10 acquires the nth intermediate frame 22_n based on the nth input frame 20_n (S708).

Next, the control unit 10 acquires the n-1th movement information (S710). In addition, the control unit 10 acquires the n-1th depth information and the nth depth information (S712) and identifies the nth appearing pixel 222_n based on the n-1th depth information and the nth depth information (S714). The control unit 10 acquires the n-1th auxiliary information 28_n-1 based on the n-1th cumulative feature information 26_n-1, the n-1th movement information, and the nth appearing pixel 222_n (S716). The control unit 10 then inputs the nth intermediate frame 22_n and the n-1th auxiliary information 28_n-1 to the machine learning model 200 to acquire the nth estimated frame 24_n and the nth cumulative feature information 26_n (S718). The control unit 10 determines whether the next frame exists (S720), and if determining that the next frame exists (S720: Y), increments n to n+1 and repeats the processes of S706 to S718. If the control unit 10 determines that the next frame does not exist (S720: N), it ends this process. If the control unit 10 determines that the next frame does not exist (S720: N), it may cause the display unit 18 to display the first to Nth estimated frames 24 directly.

### [5. Summary]

According to the image processing system 1 related to the embodiment described above, an nth color change pixel including color information that changes regardless of the movement of the object in an nth intermediate frame based on the texture information of the object and acquires nth auxiliary information by replacing the pixel value of the color change pixel in the nth cumulative feature information with a predetermined value. That is, it is possible to perform high-precision super-resolution processing on moving images generated from objects with changing textures without relying on movement information, in image processing means that estimate high-quality moving images based on low-quality moving images using movement information and information from past frames.

The invention according to the present disclosure is not limited to the above-described embodiment. Furthermore, the specific character strings or numerical values described above and the specific character strings or numerical values in the drawings are examples, and the present invention is not limited to these character strings or numerical values.

For example, in the present embodiment, an example has been given in which the number of intermediate pixels is greater than the number of input pixels and the number of intermediate pixels is the same as the number of estimated pixels, but the number of intermediate pixels may be the same as the number of input pixels and the number of estimated pixels may be greater than the number of intermediate pixels. That is, the intermediate frame 22 need not necessarily be an enlarged version of the input frame 20.

### [6. Postscript]

(1) An image processing system comprising at least one processor, wherein:
   the at least one processor
   acquires each of first to Nth input frames (N is a natural number of 2 or more) having a predetermined number of input pixels;
   acquires first to Nth intermediate frames by generating intermediate frames having a number of intermediate pixels equal to or greater than the number of input pixels and that correspond to the input frames based on the input frame;
      and
   acquires first to Nth estimated frames having a number of estimated pixels equal to or greater than the number of intermediate pixels and greater than the number of input pixels by inputting each intermediate frame into a machine learning model;
   the machine learning model
   includes a cumulative feature information output layer having the nth intermediate frame (n = 2, 3, ..., N) and n-1th auxiliary information based on n-1th cumulative feature information indicating a feature of the first to n-1th intermediate frames are input, and wherein the nth cumulative feature information indicating a feature of the first to nth intermediate frames is output;
   and an estimated frame output layer wherein the nth cumulative feature information is input and wherein the nth estimated frame is output;
   the at least one processor
   identifies an nth color change pixel including color information that changes regardless of movement of an object in the nth intermediate frame based on texture information of the object and acquires the nth auxiliary information by replacing a pixel value of the color change pixel at the nth cumulative feature information with a predetermined value; and
   the machine learning model
   learns using a plurality of training data respectively including a learning intermediate frame having the number of intermediate pixels generated based on a learning intermediate frame having the number of intermediate pixels generated based on a learning input frame having the number of input pixels,
   the auxiliary information in which the color change pixels are replaced with a predetermined value, and a learning estimated frame having the number of estimated pixels.
(2) The image processing system according to (1), wherein
   each of the input frames is an image obtained by rendering three-dimensional data depicting one or more objects as seen from a predetermined viewpoint.
(3) The image processing system according to (2), wherein
   each of the input frames is an image obtained by rendering so that the viewpoint varies for each of the input frames,
   the at least one processor acquires variation information, which is information relating to variation of the viewpoint for each input frame in the rendering, and
   generates each of the intermediate frames found by interpolating the pixel value of the position corresponding to each pixel before variation in the input frame based on the variation information and each pixel of each of the input frames.
(4) The image processing system according to (2) or (3), wherein
   the at least one processor
   acquires n-1th movement information, which is information indicating an amount and a direction of movement from an n-1th input frame to an nth input frame and
   acquires the n-1th auxiliary information by applying movement compensation to the n-1th cumulative feature information based on the n-1th movement information.
(5) The image processing system according to (4), wherein
   the at least one processor
   acquires n-1th depth information indicating the depth of each pixel in the n-1th input frame and nth depth information indicating the depth of each pixel in the nth input frame
   identifies an nth appearing pixel, which is a pixel in the nth intermediate frame in which all or part of the object not displayed in the n-1th intermediate frame is displayed, based on the n-1th depth information and the nth depth information and
   acquires the n-1th auxiliary information by replacing the pixel value of the nth appearing pixel in the n-1th cumulative feature information with a predetermined value.
(6) The image processing system according to (1) or (2), wherein
   the cumulative feature information output layer is input with the first intermediate frame and imparted auxiliary information and outputs the first cumulative feature information.
(7) The image processing system according to (1) or (2), wherein
   the cumulative feature information is image information having the same number of pixels as the number of intermediate pixels.
(8) The image processing system according to (1) or (2),
   wherein the color change pixel is represented by information representing infinity or not a number.
(9) An image processing method, wherein: a processor
   acquires each of first to Nth input frames (N is a natural number of 2 or more) having a predetermined number of input pixels;
   acquires first to Nth intermediate frames by generating intermediate frames having a number of intermediate pixels equal to or greater than the number of input pixels and that correspond to the input frames based on the input frame;
      and
   acquires first to Nth estimated frames having a number of estimated pixels equal to or greater than the number of intermediate pixels and greater than the number of input pixels by inputting each intermediate frame into a machine learning model;
   the machine learning model
   includes a cumulative feature information output layer having the nth intermediate frame (n = 2, 3, ..., N) and n-1th auxiliary information based on n-1th cumulative feature information indicating a feature of the first to n-1th intermediate frames are input, and wherein the nth cumulative feature information indicating a feature of the first to nth intermediate frames is output;
   and an estimated frame output layer wherein the nth cumulative feature information is input and wherein the nth estimated frame is output;
   the processor
   identifies an nth color change pixel including color information that changes regardless of movement of an object in the nth intermediate frame based on texture information of the object and acquires the nth auxiliary information by replacing a pixel value of the color change pixel at the nth cumulative feature information with a predetermined value; and
   the machine learning model
   learns using a plurality of training data respectively including a learning intermediate frame having the number of intermediate pixels generated based on a learning intermediate frame having the number of intermediate pixels generated based on a learning input frame having the number of input pixels,
   the auxiliary information in which the color change pixels are replaced with a predetermined value, and a learning estimated frame having the number of estimated pixels.
(10) A program for making:
   input frame acquisition means for
   acquiring each of first to Nth input frames (N is a natural number of 2 or more) having a predetermined number of input pixels;
   intermediate frame acquisition means for acquiring first to Nth intermediate frames by generating intermediate frames having a number of intermediate pixels equal to or greater than the number of input pixels and that correspond to the input frames based on the input frame;
   and estimated frame acquisition means for acquiring first to Nth estimated frames having a number of estimated pixels equal to or greater than the number of intermediate pixels and greater than the number of input pixels by inputting each intermediate frame into a machine learning model function in a computer;
   wherein
   the machine learning model
   includes a cumulative feature information output layer having the nth intermediate frame (n = 2, 3, ..., N) and n-1th auxiliary information based on n-1th cumulative feature information indicating a feature of the first to n-1th intermediate frames are input, and wherein the nth cumulative feature information indicating a feature of the first to nth intermediate frames is output;
   and an estimated frame output layer wherein the nth cumulative feature information is input and wherein the nth estimated frame is output;
   the program also making
   identification means for identifying an nth color change pixel including color information that changes regardless of movement of an object in the nth intermediate frame based on texture information of the object and auxiliary information acquisition means for acquiring the nth auxiliary information by replacing a pixel value of the color change pixel at the nth cumulative feature information with a predetermined value function in the computer; and
   the machine learning model
   learns using a plurality of training data respectively including a learning intermediate frame having the number of intermediate pixels generated based on a learning intermediate frame having the number of intermediate pixels generated based on a learning input frame having the number of input pixels,
   the auxiliary information in which the color change pixels are replaced with a predetermined value, and a learning estimated frame having the number of estimated pixels.

## Claims

1. An image processing system comprising at least one processor, wherein:
the at least one processor
acquires each of first to Nth input frames (N is a natural number of 2 or more) having a predetermined number of input pixels;
acquires first to Nth intermediate frames by generating intermediate frames having a number of intermediate pixels equal to or greater than the number of input pixels and that correspond to the input frames based on the input frame;
and
acquires first to Nth estimated frames having a number of estimated pixels equal to or greater than the number of intermediate pixels and greater than the number of input pixels by inputting each intermediate frame into a machine learning model;
the machine learning model
includes a cumulative feature information output layer having the nth intermediate frame (n = 2, 3, ..., N) and n-1th auxiliary information based on n-1th cumulative feature information indicating a feature of the first to n-1th intermediate frames are input, and wherein the nth cumulative feature information indicating a feature of the first to nth intermediate frames is output;
and an estimated frame output layer wherein the nth cumulative feature information is input and wherein the nth estimated frame is output;
the at least one processor
identifies an nth color change pixel including color information that changes regardless of movement of an object in the nth intermediate frame based on texture information of the object and acquires the nth auxiliary information by replacing a pixel value of the color change pixel at the nth cumulative feature information with a predetermined value; and
the machine learning model
learns using a plurality of training data respectively including a learning intermediate frame having the number of intermediate pixels generated based on a learning intermediate frame having the number of intermediate pixels generated based on a learning input frame having the number of input pixels,
the auxiliary information in which the color change pixels are replaced with a predetermined value, and a learning estimated frame having the number of estimated pixels.

2. The image processing system according to claim 1, wherein
each of the input frames is an image obtained by rendering three-dimensional data depicting one or more objects as seen from a predetermined viewpoint.

3. The image processing system according to claim 2, wherein
each of the input frames is an image obtained by rendering so that the viewpoint varies for each of the input frames,
the at least one processor acquires variation information, which is information relating to variation of the viewpoint for each input frame in the rendering, and
generates each of the intermediate frames found by interpolating the pixel value of the position corresponding to each pixel before variation in the input frame based on the variation information and each pixel of each of the input frames.

4. The image processing system according to claim 2 or 3, wherein
the at least one processor
acquires n-1th movement information, which is information indicating an amount and a direction of movement from an n-1th input frame to an nth input frame and
acquires the n-1th auxiliary information by applying movement compensation to the n-1th cumulative feature information based on the n-1th movement information.

5. The image processing system according to claim 4, wherein
the at least one processor
acquires n-1th depth information indicating the depth of each pixel in the n-1th input frame and nth depth information indicating the depth of each pixel in the nth input frame
identifies an nth appearing pixel, which is a pixel in the nth intermediate frame in which all or part of the object not displayed in the n-1th intermediate frame is displayed, based on the n-1th depth information and the nth depth information and
acquires the n-1th auxiliary information by replacing the pixel value of the nth appearing pixel in the n-1th cumulative feature information with a predetermined value.

6. The image processing system according to claim 1 or 2, wherein
the cumulative feature information output layer is input with the first intermediate frame and imparted auxiliary information and outputs the first cumulative feature information.

7. The image processing system according to claim 1 or 2, wherein
the cumulative feature information is image information having the same number of pixels as the number of intermediate pixels.

8. The image processing system according to claim 1 or 2,
wherein the color change pixel is represented by information representing infinity or not a number.

9. An image processing method, wherein: a processor
acquires each of first to Nth input frames (N is a natural number of 2 or more) having a predetermined number of input pixels;
acquires first to Nth intermediate frames by generating intermediate frames having a number of intermediate pixels equal to or greater than the number of input pixels and that correspond to the input frames based on the input frame;
and
acquires first to Nth estimated frames having a number of estimated pixels equal to or greater than the number of intermediate pixels and greater than the number of input pixels by inputting each intermediate frame into a machine learning model;
the machine learning model
includes a cumulative feature information output layer having the nth intermediate frame (n = 2, 3, ..., N) and n-1th auxiliary information based on n-1th cumulative feature information indicating a feature of the first to n-1th intermediate frames are input, and wherein the nth cumulative feature information indicating a feature of the first to nth intermediate frames is output;
and an estimated frame output layer wherein the nth cumulative feature information is input and wherein the nth estimated frame is output;
an nth color change pixel including color information that changes regardless of movement of an object in the nth intermediate frame is identified based on texture information of the object and the nth auxiliary information is acquired by replacing a pixel value of the color change pixel at the nth cumulative feature information with a predetermined value; and
the machine learning model
learns using a plurality of training data respectively including a learning intermediate frame having the number of intermediate pixels generated based on a learning intermediate frame having the number of intermediate pixels generated based on a learning input frame having the number of input pixels,
the auxiliary information in which the color change pixels are replaced with a predetermined value, and a learning estimated frame having the number of estimated pixels.

10. A program for making:
input frame acquisition means for
acquiring each of first to Nth input frames (N is a natural number of 2 or more) having a predetermined number of input pixels;
intermediate frame acquisition means for acquiring first to Nth intermediate frames by generating intermediate frames having a number of intermediate pixels equal to or greater than the number of input pixels and that correspond to the input frames based on the input frame;
and estimated frame acquisition means for acquiring first to Nth estimated frames having a number of estimated pixels equal to or greater than the number of intermediate pixels and greater than the number of input pixels by inputting each intermediate frame into a machine learning model function in a computer;
wherein
the machine learning model
includes a cumulative feature information output layer having the nth intermediate frame (n = 2, 3, ..., N) and n-1th auxiliary information based on n-1th cumulative feature information indicating a feature of the first to n-1th intermediate frames are input, and wherein the nth cumulative feature information indicating a feature of the first to nth intermediate frames is output;
and an estimated frame output layer wherein the nth cumulative feature information is input and wherein the nth estimated frame is output;
the program also making
identification means for identifying an nth color change pixel including color information that changes regardless of movement of an object in the nth intermediate frame based on texture information of the object and auxiliary information acquisition means for acquiring the nth auxiliary information by replacing a pixel value of the color change pixel at the nth cumulative feature information with a predetermined value function in the computer; and
the machine learning model
learns using a plurality of training data respectively including a learning intermediate frame having the number of intermediate pixels generated based on a learning intermediate frame having the number of intermediate pixels generated based on a learning input frame having the number of input pixels,
the auxiliary information in which the color change pixels are replaced with a predetermined value, and a learning estimated frame having the number of estimated pixels.
